# EUROPÄISCHE PATENTSCHRIFT

(11) **EP 1 073 599 B1**
(45) Veröffentlichungstag und Bekanntmachung des Hinweises auf die Patenterteilung: **07.08.2002**
(21) Anmeldenummer: 99920663.4
(22) Anmeldetag: 14.04.1999
(51) Int. Cl.: B65G 47/91

(54) **VORRICHTUNG UND VERFAHREN ZUM HANDHABEN VON SUBSTRATEN**
DEVICE AND METHOD FOR HANDLING SUBSTRATES
PROCEDE ET DISPOSITIF POUR MANIPULER DES SUBSTRATS

(30) Priorität: 24.04.1998 DE 19818479
(43) Veröffentlichungstag der Anmeldung: 07.02.2001
(73) Patentinhaber: Steag HamaTech AG, 75447 Sternenfels (DE)
(72) Erfinder: SPEER, Ulrich, D-75239 Eisingen (DE); WEBER, Klaus, D-75015 Bretten (DE)
(74) Vertreter: Wagner, Karl H., Dipl.-Ing.
(86) Internationale Anmeldenummer: EP9902499
(87) Internationale Veröffentlichungsnummer: WO9955605

(56) Entgegenhaltungen:
- EP-A- 0 793 224
- WO-A-97/43760
- WO-A-98/57806
- PATENT ABSTRACTS OF JAPAN vol. 016, no. 201 (P-1352), 14. Mai 1992 (1992-05-14) -& JP 04 032045 A (DAINIPPON INK & CHEM INC;OTHERS: 01), 4. Februar 1992 (1992-02-04)

## Beschreibung

Die Erfindung betrifft eine Vorrichtung zum Handhaben von ein Innenloch aufweisenden Substraten mit einem Innengreifer und einem Außengreifer und ein Verfahren zum Handhaben von ein Innenloch aufweisenden Substraten, bei dem ein erstes Substrat mit einem Innenlochgreifer ergriffen wird.

Verfahren und Vorrichtungen dieser Art sind beispielsweise in der nicht vorveröffentlichten, auf dieselbe Anmelderin zurückgehenden DE-A 197 18 471 beschrieben, die zur Vermeidung von Wiederholungen insofern zum Gegenstand der vorliegenden Anmeldung gemacht wird. Bei der dort beschriebenen Vorrichtung zum Verkleben von zwei Substraten sind mehrere Vorrichtungen zum Handhaben von Substraten, die nachfolgend als Händler bezeichnet werden, bekannt. Einer dieser Händler, der zum Transport von Substraten von einem Rundschalttisch zu einer Verklebestation dient, weist einen Innengreifer und einen Außengreifer auf, die beide jeweils als sogenannte Vakuumgreifer ausgebildet sind. Die Funktionsweise dieses bestimmten Händlers liegt darin, von dem Rundschalttisch zunächst ein erstes Substrat mit dem Innengreifer aufzunehmen, zu einer Verklebestation zu bringen und dort abzulegen. Nachfolgend wird der Händler zurück zu dem Rundschalttisch bewegt. Dortnimmt er mit dem Innengreifer ein zweites Substrat auf, das mit dem Außengreifer in Kontakt gebracht wird, wobei durch Zusammenwirken des Innengreifers mit dem Außengreifer eine Biegung in dem zweiten Substrat erzeugt wird. Nachfolgend wird das zweite Substrat zu der Verklebestation bewegt und dort auf dem ersten Substrat, auf dem ein Kleber aufgebracht wurde, abgelegt.

Bei dem beschriebenen Händler kann jeweils nur ein Substrat aufgenommen und transportiert werden. Ferner wird, um das Lösen der Vakuumgreifer zu beschleunigen, beim Lösen der Greifer, nicht nur der Unterdruck beseitigt, sondern es wird auch ein positiver Luftsstoß an das Substrat angelegt. Dabei ergibt sich jedoch die Gefahr, daß, insbesondere beim Lösen des Innengreifers, Luft zwischen die beiden zu verklebenden Substrate eingeblasen wird, was unerwünscht ist, da dies zu Lufteinschlüssen in dem zwischen den Substraten befindlichen Klebern führen kann.

Bei der in der DE-A-197 18 471 beschriebenen Vorrichtung werden an anderer Stelle auch Innenlochgreifer verwendet, die jeweils ein Substrat bzw. die miteinander verklebten Substrate in einem Innenloch ergreifen, um sie dann zu transportieren. Die Innenlochgreifer können jedoch jeweils nur ein Substrat bzw. miteinander verklebte, eine Einheit bildende Substrate aufnehmen und transportieren.

Aus der DE-A-195 29 537 ist ferner eine Vorrichtung zum Greifen und Halten eines flachen Substrats mit einem Innenloch bekannt, bei dem mehrere fingerförmige, in einem Gehäuse kippbar gelagerte Greifer in das Innenloch des Substrats eingeführt und anschließend nach außen geschwenkt werden, um das Substrat am Innenloch zu halten. In der Zeitschrift "o+p-ölhydraulik und pneumatik" - 22 (1978) Nr 1 Seite 10 sind ferner unterschiedliche pneumatisch betätigbarbare Greifer dargestellt. Dabei ist unter anderem ein Innenlochgreifer beschrieben. Bei dem in der DE-A-195 29 537 und dem aus der Zeitschrift bekannten Innenlochgreifern ergibt sich das Problem, daß jeweils nur ein einzelnes Substrat gehandhabt werden kann.

Aus der EP 0 793 224 A ist eine Vorrichtung zum Handhaben von Substraten im Zusammenhang mit der Herstellung von CD's bekannt, bei der ein Innengreifer in Form eines Innenlochgreifers und ein Außengreifer in Form von Vakuumsaugern vorgesehen ist, die unabhängig voneinander Substrate erfassen und zum Verkleben miteinander in Kontakt bringen.

Aus Patent Abstracts of Japan Vol. 016, No. 201 (P-1352), 14. Mai 1992 (1992-05-14) - & JP 04 032045 A ist ein Verfahren zum Verkleben von Substraten für die Fertigung von optischen Speichermedien bekannt, bei dem eines der Substrate konvex gebogen wird und danach durch Freisetzen und durch ihre eigene Steifigkeit auf das andere zu verklebende Substrat aufgebracht wird, um das Eindringen von Luftblasen zu verhindern.

Aus der WO 97 43 760 A ist eine Klebemittel-Düse zum Verkleben von DVD-Scheiben bekannt, mit der das Klebemittel zwischen zwei zu verklebende Substrate eingebracht wird.

Aus der WO 98 57806 A ist eine Vorrichtung zum Verkleben von Substraten zu CD's bekannt, bei dem eine Separations-Halterung verwendet wird, um die Scheibenhälften getrennt zu halten. Darüberhinaus ist eine Disc-Deformationshalterung vorgesehen, die dazu verwendet wird, während des endgültigen Verklebens zu verhindern, dass sich die Scheibenhälften während des Klebevorgangs deformieren.

Der Erfindung liegt die Aufgabe zugrunde, eine Vorrichtung und ein Verfahren zum Handhaben von Substraten zu schaffen, die bzw. das die gleichzeitige Handhabung von mehreren Substraten ermöglicht und dennoch konstruktiv einfach ist bzw. einfach durchgeführt werden kann und eine hohe Produktivität ermöglicht. Eine weitere Aufgabe der Erfindung liegt darin, eine Vorrichtung und ein Verfahren zum Handhaben von ein Innenloch aufweisenden Substraten zu schaffen, bei dem ein Einschluß von Luft zwischen aufeinandergelegten Substraten vermieden wird.

Ausgehend von einer aus der EP 0 793 224 bekannten Vorrichtung wird die gestellte Aufgabe erfindungsgemäß dadurch gelöst, daß die Vorrichtung eine Steuervorrichtung aufweist, die die Innen- und Außengreifer derart steuert, daß sie relativ zueinander bewegt werden während sie dasselbe Substrat ergreifen, um es zu verbiegen. Dies ermöglicht, dass beim Ablegen des so aufgenommenen Substrats auf einem anderen Substrat zunächst der Mittelbereich des aufgenommenen Substrats mit dem darunterliegenden Substrat in Kontakt kommt und erst nachfolgend die Randbereiche, wodurch wiederum Lufteinschlüsse zwischen den Substraten verhindert werden. Vorteilhafterweise ist die Vorrichtung zum Transport der Substrate horizontal bewegbar.

Ein Vorteil der Ausgestaltung des Innengreifers als Innenlochgreifer im Gegensatz zu einem Vakuumgreifer liegt ferner darin, daß ein Innenfochgreifer schnell und effektiv gelöst werden kann, ohne die Gefahr, daß zum Beispiel Luft zwischen zwei zu verklebende Substrate eingeblasen wird.

Der Außendurchmesser des Innenlochgreifers ist vorteilhafterweise kleiner als der Innendurchmesser des Innenlochs der Substrate, um zu ermöglichen, daß sich der Innenlochgreifer durch ein erstes Substrat hindurch erstreckt und ein zweites Substrat ergreifen kann, während das erste Substrat durch den Außengreifer ergriffen bzw. gehalten wird. Um eine einfache und effektive Arbeitsweise des Innenlochgreifers zu bewirken, ist der Innenlochgreifer vorzugsweise pneumatisch betätigbar.

Gemäß einer vorteilhaften Ausführungsform der Erfindung sind die Innen- und Außengreifer unabhängig voneinander betätigbar, um eine erhöhte Flexibilität der Vorrichtung beim Ergreifen von einem oder mehreren Substraten zu ermöglichen. Gemäß einer Ausführungsform der Erfindung ist der Außengreifer ein Vakuumsauger mit einer Vielzahl von in einem Ring angeordneten Saugern, die ein sicheres Ergreifen der Substrate im Außenbereich gewährleisten. Vorteilhafterweise weist der Ring eine konvex gebogene Form auf, um ein durch den Außengreifer aufgenommenes Substrat in den Randbereichen zu verbiegen, wodurch ermöglicht wird, daß beim Ablegen des so aufgenommenen Substrats auf einem anderen Substrat zunächst der Mittelbeceich des aufgenommenen Substrats mit dem darunterliegenden Substrat in Kontakt kommt und erst nachfolgend die Randbereiche, wodurch wiederum Lufteinschlüsse zwischen den Substraten verhindert werden können. Vorteilhafterweise ist die Vorrichtung zum Transport der Substrate horizontal bewegbar.
Die gestellte Aufgabe wird weiterhin durch ein Verfahren gelöst, bei dem das erste durch den Innenlochgreifer ergriffene Substrat mit einem Außengreifer in Kontakt gebracht wird, das Substrat durch den Außengreifer ergriffen wird, der Innenlochgreifer gelöst wird, der Innenlochgreifer durch das Loch in dem ersten Substrat bewegt wird um zunächst ein zweites Substrat zu ergreifen und später wieder zu lösen, der Innenlochgreifer wieder das erste Substrat ergreift und dann relativ zum Außengreifer bewegt wird, um das erst Substrat zu verbiegen, der Mittelbereich des gebogenen ersten Substrats mit dem zweiten Substrat in Kontakt gebracht wird und anschließend die restlichen Bereiche mit dem zweiten Substrat in Kontakt gebracht werden. Bei diesem Verfahren können gleichzeitig zwei Substrate gehandhabt und ggf. transportiert werden, wodurch die Zykluszeiten verringert werden. Transportwege werden vorteilhaft verkürzt, da gleichzeitig zwei Substrate transportiert werden, wodurch sich die Lebenszeit der verwendeten Komponenten, insbesondere eines Antriebs erhöht. Die Substrate werden zueinander zentriert, da der Innenlochgreifer die Substrate jeweils durch Aufnahme in ihrem Innenloch zentriert, und diese Zentrierung auch bei der Übergabe an den Außengreifer beibehalten wird. Ferner werden Lufteinschlüsse zwischen den Substraten vermieden, wie schon unter Bezugnahme auf die Vorrichtung beschrieben wurde.

Vorteilhafterweise erfolgt das in Kontaktbringen des ersten Substrats mit dem Außengreifer durch eine Vertikalbewegung und insbesondere durch Anheben des Innenlochgreifers.

Gemäß einer bevorzugten Ausführungsform der Erfindung wird das Ergreifen des ersten und/oder zweiten Substrats mit dem Innenlochgreifer pneumatisch gesteuert, da dies eine einfache und genaue Steuerung sowie ein gleichmäßiges Ergreifen des Substrats am Innenloch ermöglicht.

Vorzugsweise wird das erste Substrat durch den Außengreifer mittels Unterdruck ergriffen.

Gemäß einer bevorzugten Ausführungsform der Erfindung wird das erste Substrat in den Randbereichen vom zweiten Substrat weggebogen, wodurch bei einem nachfolgenden Ablegen des ersten Substrats auf dem zweiten Substrat ermöglicht wird, daß das erste Substrat zunächst im Mittelbereich mit dem zweiten Substrat in Kontakt kommt und erst nachfolgend durch Abrollen des ersten Substrates die Außenbereiche der Substrate miteinander in Kontakt kommen, wodurch Lufteinflüsse zwischen den Substraten vermieden werden. Vorzugsweise werden der Innenlochgreifer und der Außengreifer horizontal zum Transport der aufgenommenen Substrate bewegt.

Die Erfindung wird nachstehend anhand eines bevorzugten Ausführungsbeispiels unter Bezugnahme auf die Figuren näher erläutert. Es zeigen:
- Figur 1: eine schematische Schnittdarstellung der erfindungsgemäßen Vorrichtung; und
- Figuren 2 a bis c: schematisch die Funktionsabläufe gemäß dem Verfahren der vorliegenden Erfindung.

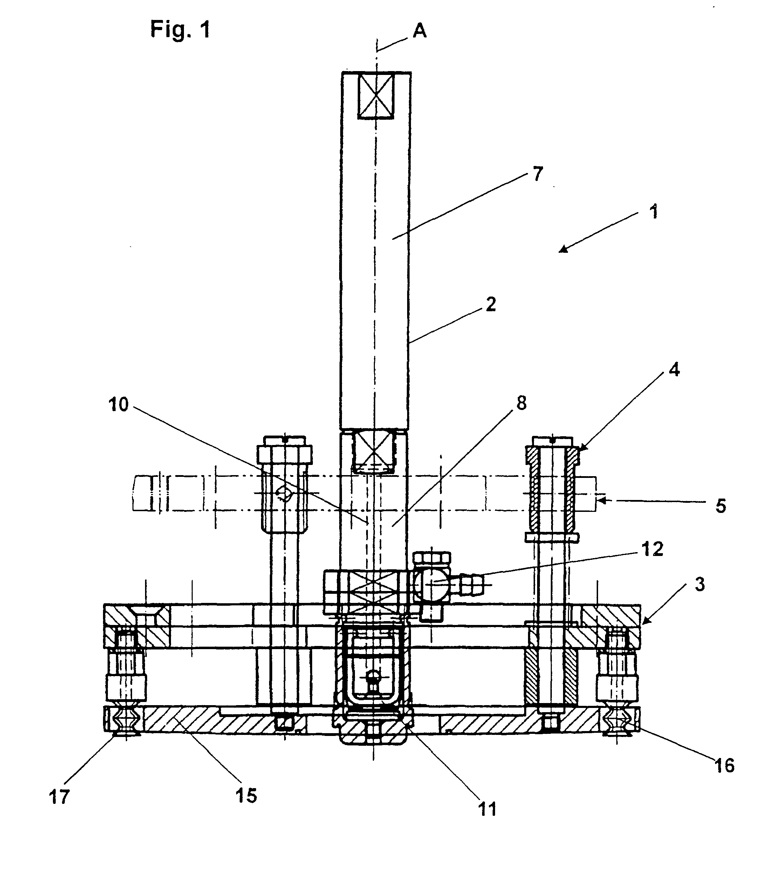

Figur 1 zeigt schematisch im Schnitt die wesentlichen Teile einer Handhabungsvorrichtung bzw. eines Händlers, wie er zum Beispiel bei einer Vorrichtung zum Verkleben von zwei Substraten gemäß der oben genannten nicht vorveröffentlichten DE-A-197 18 471 eingesetzt werden kann.

Der erfindungsgemäße Händler 1 besteht im wesentlichen aus einem Innenlochgreifer 2 und einem Außengreifer 3, der als Vakuumgreifer ausgebildet ist. Der Außengreifer 3 ist über eine geeignete Befestigungsvorrichtung 4 an einer Hubvorrichtung 5, die nur schematisch dargestellt ist, befestigt. Der Innenlochgreifer 2 ist auch mit einer nicht dargestellten Hubvorrichtung verbunden, um entlang seiner Längsachse A bewegt zu werden.

Der Innenlochgreifer 2 weist ein oberes langgestrecktes Schaftglied 7 auf, an dessen unterem Ende in geeigneter Weise ein aufspreizbares Glied 8 befestigt ist. Das aufspreizbare Element 8 besitzt Schlitze 10, um eine Aufspreizung des aufspreizbaren Elementes 8 zu ermöglichen. Innerhalb des aufspreizbaren Elementes 8 befindet sich ein ausdehnbarer Körper 11, der über ein an dem aufspreizbaren Element befestigtes Anschlußelement 12 pneumatisch oder hydraulisch betätigt wird. Dabei dehnt sich der ausdehnbare Körper 11 aus und spreitzt dadurch das aufspreizbare Element 8 auf, um, wie nachfolgend noch beschrieben wird, mit einem Innenloch eines Substrats in Eingriff zu kommen.

Wenn der ausdehnbare Körper 11 nicht pneumatisch oder hydraulisch mit Druck beaufschlagt ist, befindet sich das aufspreizbare Glied 8 in einem nicht aufgespreizten Ruhezustand, in den er durch nicht dargestellte, geeignete Mittel vorgespannt ist.

Der als Vakuumgreifer ausgebildete Außengreifer 3 weist einen Metallring 15 auf, in dem im äußeren Randbereich mehrere Sauger 16 mit Saugnäpfen 17 angeordnet sind. Die Sauger 16 sind über entsprechende Unterdruckanschlüsse mit einer nicht dargestellten Unterdruckquelle bzw. Vakuumquelle verbindbar, um in bekannter Art und Weise ein Substrat mittels Unterdruck zu ergreifen.

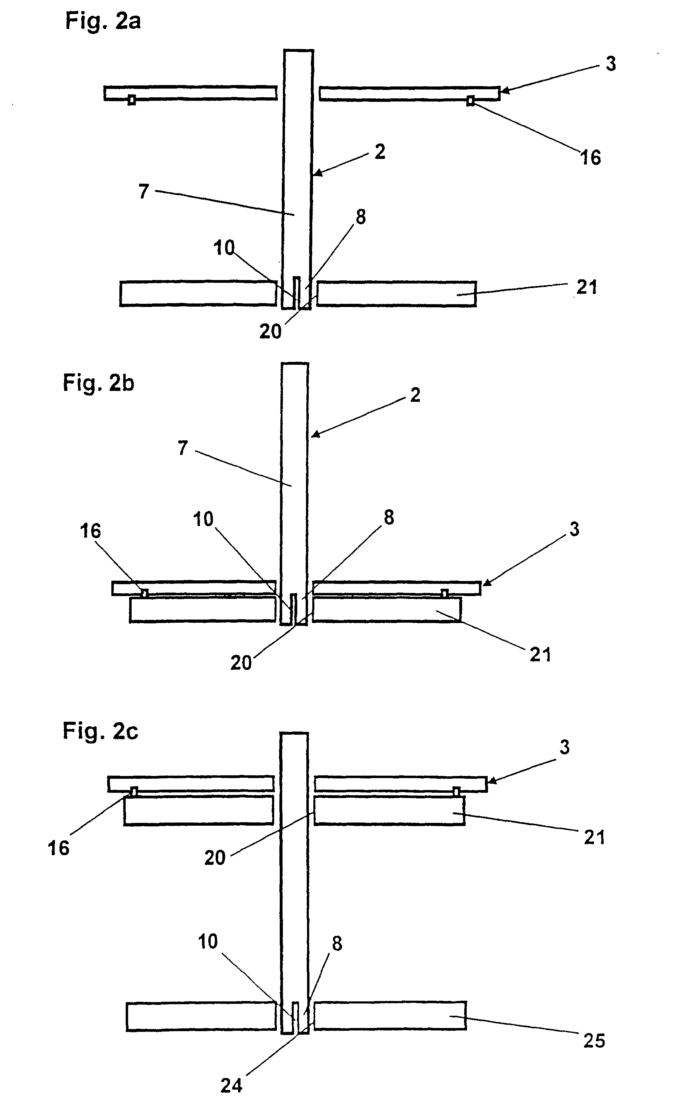

Die Funktionsvorrichtung des Händlers 1 wird nun anhand der Figuren 2 a bis 2 c beschrieben. Figur 2a zeigt schematisch, wie das aufspreizbare Element 8 in das Innenloch 20 eines ersten Wafers 21 eingeführt ist. Der Außengreifer 3 mit seinen Saugern 16 befindet sich oberhalb des ersten Wafers 21 und ist von diesem beabstandet.

In dieser Stellung wird das aufspreizbare Element 8 über den in der Figur 2 a nicht dargestellten ausdehnbaren Körper 11 aufgespreizt, um mit dem Innenumfang des Innenlochs 20 des Substrats 21 in Eingriff zu kommen. Hierbei wird eine Zentrierung des ersten Substrats 21 bezüglich des Innenlochgreifers erreicht, da dieser gleichmäßig mit dem Innenumfang des Innenlochs 20 in Eingriff kommt.

Durch diesen Eingriff wird das Substrat 21 ergriffen. Wenn das Substrat 21 in dieser Art und Weise ergriffen ist, wird es durch den Innenlochgreifer 2 angehoben und mit den Saugern 16 des Außengreifers 3 in Kontakt gebracht. Durch an den Saugern 16 herrschenden Unterdruck wird das Substrat 21 in seinen Außenbereichen an die Sauger 16 angesaugt und ergriffen. Zu diesem Zeitpunkt wird der Innenlochgreifer gelöst, und das Substrat 21 wird nur noch durch den Außengreifer 3 gehalten.

Nach dem Lösen des Innenlochgreifers wird dieser durch das Innenloch 20 des Substrats 21 hindurch nach unten bewegt, und zwar in ein Innenloch 24 eines zweiten Substrats 25. In dieser Position wird das aufspreizbare Element 8 wiederum über den ausdehnbaren Körper 11 aufgespreizt, um mit dem Innenumfang des Innenlochs 24 des zweiten Substrats 25 in Eingriff zu kommen. In dieser Position wird der gesamte Händler angehoben und horizontal bewegt, um die ersten und zweiten Substrate 21 bzw. 25 zu einer anderen Position zu transportieren, wie zum Beispiel einer Verklebeeinheit.

In der Verklebeeinheit wird das zweite Substrat 25 durch Lösen des Innenlochgreifers 2 abgelegt, und die zu dem ersten Substrat weisende Oberfläche 21 wird mit einem Kleber beschichtet. Während dieser Beschichtung fährt der Innenlochgreifer wieder nach oben, so daß sich das aufspreizbare Element 8 in dem Innenloch 20 des ersten Substrats 21 befindet. Das aufspreizbare Glied wird wieder, wie oben beschrieben, aufgespreizt und kommt mit dem Innenloch 20 des ersten Substrats 21 in Eingriff. Durch eine kleine nach unten gerichtete Bewegung des Innenlochgreifers werden die Außenbereiche des Substrats 21, die noch immer durch die Sauger 16 des Außengreifers gehalten werden, von dem unteren Substrat weggebogen. Dann wird das erste Substrat 21 in Kontakt mit dem unteren Substrat 25 bewegt, wobei die Mittelbereiche der Substrate als erstes in Kontakt kommen. Durch Lösen des Außengreifers kommen dann auch die restlichen Bereiche der Substrate in Kontakt miteinander, wobei die Außenbereiche als letztes in Kontakt kommen. Dadurch, daß die Substrate beim Ergreifen durch den Innenlochgreifer jeweils bezüglich desselben zentriert werden, werden sie auch genau zentriert zueinander abgelegt, was insbesondere beim Verkleben von Substraten notwendig ist.

Die Erfindung wurde zuvor anhand eines bevorzugten Ausführungsbeispiels erläutert. Dem Fachmann sind jedoch zahlreiche Ausgestaltungen und Abwandlungen möglich, ohne daß dadurch der Erfindungsgedanke verlassen wird. Das erfindungsgemäße Verfahren wurde in Zusammenhang mit dem Verkleben von Substraten beschrieben. Die Prinzipien der Erfindung sind jedoch auch auf andere Verfahren anwendbar, bei denen zwei Substrate gehandhabt werden müssen.

Ferner ist die Erfindung auch nicht auf die genaue Art des Innenlochgreifers, der nur mit dem Innenloch eines Substrats in Eingriff kommt, beschränkt. Vielmehr könnte der Innenlochgreifer auch eine Schulter aufweisen, die nach Durchführung durch ein Innenloch eines Substrats und Aufspreizen des Innenlochgreifers mit der Unterseite des Substrats in Eingriff kommt, um das Substrat zu tragen. Anstelle des Vakuumgreifers als Außengreifer wäre auch ein anderer, im Außenbereich der Substrate angreifender Greifer in Kombination mit dem Innenlochgreifer möglich.

## Patentansprüche

1. Vorrichtung (1) zum Handhaben von ein Innenloch (20, 24) aufweisenden Substraten (21, 25) mit einem Innengreifer (2) und einem Außengreifer (3), wobei der Innengreifer (2) ein Innenlochgreifer (2) und der Außengreifer (3) ein Vakuumsauger (3) ist, der eine Vielzahl von in einem Ring (15) angeordneten Saugern (16) aufweist, **dadurch gekennzeichnet, daß** die Vorrichtung (1) eine Steuervorrichtung aufweist, die die Innen- und Außengreifer (2, 3) derart steuert, daß sie relativ zueinander bewegt werden während sie das selbe Substrat (21) ergreifen, um das Substrat (21) zu verbiegen.

2. Vorrichtung (1) nach Anspruch 1, **dadurch gekennzeichnet, daß** der Ring (15) eine konvex gebogene Form aufweist.

3. Vorrichtung (1) nach Anspruch 1 oder 2, **dadurch gekennzeichnet, daß** der Innenlochgreifer (2) vertikal bewegbar ist.

4. Vorrichtung (1) nach einem der vorhergehenden Ansprüche, **dadurch gekennzeichnet, daß** der Außendurchmesser des Innenlochgreifers (2) kleiner ist als der Innendurchmesser des Innenlochs (20, 24).

5. Vorrichtung (1) nach einem der vorhergehenden Ansprüche, **dadurch gekennzeichnet, daß** der Innenlochgreifer (2) pneumatisch betätigbar ist.

6. Vorrichtung (1) nach einem der vorhergehenden Ansprüche, **dadurch gekennzeichnet, daß** die Innen- und Außengreifer (2, 3) unabhängig voneinander betätigbar sind.

7. Vorrichtung (1) nach einem der vorhergehenden Ansprüche, **dadurch gekennzeichnet, daß** die Vorrichtung (1) zum Transport der Substrate (21, 25) horizontal bewegbar ist.

8. Verfahren (1) zum Handhaben von ein Innenloch (20, 24) aufweisenden Substraten (21, 25) durch folgende Verfahrensschritte:
Ergreifen eines ersten Substrats mit einem Innenlochgreifer (2);
In-Kontakt-Bringen des ersten Substrats (21) mit einem Außengreifer (3);
Ergreifen des Substrats (21) durch den Außengreifer (3);
Lösen des Innenlochgreifers (2);
Bewegen des Innenlochgreifers (2) durch das Loch (20) in dem ersten Substrat (21); und
Ergreifen eines zweiten Substrats (25) mit dem Innenlochgreifer (2);
Lösen des zweiten Substrats;
erneutes Ergreifen des ersten Substrats mit dem Innenlochgreifer (2);
Bewegen des Innenlochgreifers relativ zum Außengreifer, zum Verbiegen des ersten Substrats;
In-Kontakt-Bringen des Mittelbereichs des gebogenen ersten Substrats (21) mit dem zweiten Substrat;
In-Kontakt-Bringen der restlichen Bereiche des ersten Substrats (21) mit dem zweiten Substrat.

9. Verfahren nach Anspruch 8, **dadurch gekennzeichnet, daß** das In-Kontakt-Bringen des ersten Substrat (21) mit dem Außengreifer (3) durch eine Vertikalbewegung erfolgt.

10. Verfahren nach Anspruch 8 oder 9, **dadurch gekennzeichnet, daß** das In-Kontakt-Bringen des ersten Substrats (21) mit dem Außengreifer (3) durch Anheben des Innenlochgreifers (2) erfolgt.

11. Verfahren nach einem der Ansprüche 8 bis 10, **dadurch gekennzeichnet, daß** das Ergreifen des ersten und/oder zweiten Substrats (21, 25) mit dem Innenlochgreifer (2) pneumatisch gesteuert wird.

12. Verfahren nach einem der Ansprüche 8 bis 11, **dadurch gekennzeichnet, daß** das Ergreifen des ersten Substrats (21) durch den Außengreifer mittels Unterdruck erfolgt.

13. Verfahren nach einem der Ansprüche 8 bis 12, **dadurch gekennzeichnet, daß** das erste Substrat (21) in den Randbereichen vom zweiten Substrat (25) weggebogen wird.

14. Verfahren nach einem der Ansprüche 8 bis 13, **dadurch gekennzeichnet, daß** der Innenlochgreifer (2) und der Außengreifer (3) horizontal bewegt werden.

## Claims

1. Device (1) for handling substrates (21, 25) having an inner hole (20, 24), comprising an inner gripper (2) and an outer gripper (3), wherein the inner gripper (2) is an inner hole gripper (2) and the outer gripper (3) is a vacuum suction device (3) which comprises a plurality of suckers (16) arranged in a ring (15), **characterised in that** the device (1) comprises a control device which controls the inner and outer gripper (2, 3) in such a manner that they are moved relative to one another, whilst they grip the same substrate (21), in order to bend the substrate (21).

2. Device (1) according to claim 1, **characterised in that** the ring (15) has a convexly curved shape.

3. Device (1) according to claim 1 or 2, **characterised in that** the inner hole gripper (2) is vertically movable.

4. Device (1) according to one of the preceding claims, **characterised in that** the outer diameter of the inner hole gripper (2) is smaller than the inner diameter of the inner hole (20, 24).

5. Device (1) according to one of the preceding claims **characterised in that** the inner hole gripper (2) is pneumatically actuable.

6. Device (1) according to one of the preceding claims, **characterised in that** the inner and outer gripper (2, 3) are actuable independently of one another.

7. Device (1) according to one of the preceding claims, **characterised in that** the device (1) is horizontally movable for transport of the substrates (21, 25).

8. Method (1) for handling substrates (21, 25), which have an inner hole (20, 24), by the following method steps:
gripping of a first substrate by an inner hole gripper (2);
bringing the first substrate (21) into contact with an outer gripper (3);
gripping the substrate (21) by the outer gripper (3);
detaching the inner hole gripper (2);
moving the inner hole gripper (2) through the hole (20) in the first substrate (21); and
gripping a second substrate (25) by the inner hole gripper (2);
detaching the second substrate;
renewed gripping of the first substrate by the inner hole gripper (2);
moving the inner hole gripper relative to the outer hole gripper for bending of the first substrate;
bringing the middle region of the bent first substrate (21) into contact with the second substrate; and
bringing the remaining regions of the first substrate (21) into contact with the second substrate.

9. Method according to claim 8, **characterised in that** the bringing of the first substrate (21) into contact with the outer gripper (3) is carried out by a vertical movement.

10. Method according to claim 8 or 9, **characterised in that** the bringing of the first substrate (21) into contact with the outer gripper (3) is carried out by raising the inner hole gripper (2).

11. Method according to one of claims 8 to 10, **characterised in that** the gripping of the first and/or second substrate (21, 25) by the inner hole gripper (2) is pneumatically controlled.

12. Method according to one of claims 8 to 11, **characterised in that** the gripping of the first substrate (21) by the outer gripper is carried out by means of underpressure.

13. Method according to one of claims 8 to 12, **characterised in that** the first substrate (21) is bent away in the edge regions from the second substrate (25).

14. Method according to one of claims 8 to 13, **characterised in that** the inner hole gripper (2) and the outer gripper (3) are moved horizontally.

## Revendications

1. Dispositif (1) pour la manipulation de substrats (21, 25) présentant un trou intérieur (20, 24) avec une griffe intérieure (2) et une griffe extérieure (3), où la griffe intérieure (2) est une griffe de trou intérieur (2) et la griffe extérieure (3) un aspirateur à vide (3) qui présente une pluralité d'aspirateurs (16) disposés dans un anneau (15), **caractérisé en ce que** le dispositif (1) présente un dispositif de commande qui commande les griffes intérieure et extérieure (2, 3) de façon qu'elles soient déplacées l'une relativement vers l'autre pendant qu'elles saisissent le même substrat (21) pour courber le substrat (21).

2. Dispositif (1) selon la revendication 1, **caractérisé en ce que** l'anneau (15) a une forme courbée d'une manière convexe.

3. Dispositif (1) selon la revendication 1 ou 2, **caractérisé en ce que** la griffe de trou intérieur (2) est déplaçable verticalement.

4. Dispositif (1) selon l'une des revendications précédentes, **caractérisé en ce que** le diamètre extérieur de la griffe de trou intérieur (2) est plus petit que le diamètre intérieur du trou intérieur (20, 24).

5. Dispositif (1) selon l'une des revendications précédentes, **caractérisé en ce que** la griffe de trou intérieur (2) est actionnable d'une manière pneumatique.

6. Dispositif (1) selon l'une des revendications précédentes, **caractérisé en ce que** les griffes intérieure et extérieure (2, 3) sont actionnables l'une indépendamment de l'autre.

7. Dispositif (1) selon l'une des revendications précédentes, **caractérisé en ce que** le dispositif (1) pour le transport des substrats (21, 25) est déplaçable horizontalement.

8. Procédé (1) pour la manipulation de substrats (21, 25) présentant un trou intérieur (20, 24), par les étapes de procédé suivantes :
- saisie d'un premier substrat avec une griffe de trou intérieur (2) ;
- mise en contact du premier substrat (21) avec une griffe extérieure (3) ;
- saisie du substrat (21) par la griffe extérieure (3) ;-
- relâchement de la griffe de trou intérieur (2) ;
- déplacement de la griffe de trou intérieur (2) à travers le trou (20) dans le premier substrat (21) ; et
- saisie d'un deuxième substrat (25) avec 1a griffe de trou intérieur (2) ;
- relâchement du deuxième substrat ;
- saisie renouvelée du premier substrat avec la griffe de trou intérieur (2) ;
- déplacement de la griffe de trou intérieur relativement à la griffe extérieure, pour courber le premier substrat ;
- mise en contact de la zone médiane du premier substrat courbé (21) avec le deuxième substrat ;
- mise en contact des zones restantes du premier substrat (21) avec le deuxième substrat.

9. Procédé selon la revendication 8, **caractérisé en ce que** la mise en contact du premier substrat (21) avec la griffe extérieure (3) a lieu par un mouvement vertical.

10. Procédé selon la revendication 8 ou 9, **caractérisé en ce que** la mise en contact du premier substrat (21) avec la griffe extérieure (3) a lieu par un relèvement de la griffe de trou intérieur (2).

11. Procédé selon l'une des revendications 8 à 10, **caractérisé en ce que** la saisie du premier et/ou du deuxième substrat (21, 25) avec la griffe de trou intérieur (2) est commandée d'une manière pneumatique.

12. Procédé selon l'une des revendications 8 à 11, **caractérisé en ce que** la saisie du premier substrat (21) par la griffe extérieure à lieu par dépression.

13. Procédé selon l'une des revendications 8 à 12, **caractérisé en ce que** le premier substrat (21) est courbé dans les zones de bord au loin du deuxième substrat (25).

14. Procédé selon l'une des revendications 8 à 13, **caractérisé en ce que** la griffe de trou intérieur (2) et la griffe extérieure (3) sont déplacées horizontalement.
